# EUROPÄISCHE PATENTANMELDUNG

(11) **EP 1 319 429 A2**
(43) Veröffentlichungstag der Anmeldung: **18.06.2003**
(21) Anmeldenummer: 02026049.3
(22) Anmeldetag: 22.11.2002
(51) Int. Cl.: A63F 3/08, G07F 17/32, H04M 3/493

(54) **Televerlosung**

(30) Priorität: 13.12.2001 DE 10161225
(71) Anmelder: Deutsche Telekom AG, 53113 Bonn (DE)
(72) Erfinder: Hermann, Roland, Dipl.-Ing., 53117 Bonn (DE)

(57) **Zusammenfassung**

Verfahren zur Verlosug einer Ware und/oder Dienstleistung über ein Kommunikationsnetz 1, insbesondere über ein Telephonnetz, wobei ein Kunde sich über ein Endgerät 2 unter Vorgabe einer zentralen Netzkennung 3 in das Netz 1 einwählt, wobei ein an das Netz 1 angeschlossener Computer 4 eine Ware und/oder Dienstleistung aus dem Angebot einer Angebots-Datenbank 6 ausgewählt und sie unter den teilnehmenden Kunden verlost.

## Beschreibung

Die vorliegende Erfindung betrifft ein Verfahren zur Verlosung einer Ware und/oder Dienstleistung. Die Erfindung betrifft ebenso ein System zur Durchführung des Verfahrens.

Verlosungen oder Preisausschreiben, bei denen der Mitspieler als potentieller Kunde einen Gewinn erhält, sind in vielfältiger Form bekannt. Sie dienen oft dazu, eine produktbezogene Werbung zu unterstützen, indem dem Kunden ein Anreiz geschaffen wird, sich auf ein bestimmtes Produkt einzulassen. Mitunter muß das zur Teilnahme berechtigende Los auch gekauft werden, wobei in dieser Art der Lotterie lediglich der Spieltrieb eines Mitspielers ausgenutzt wird. Nachteilig an den bekannten Arten der Verlosung ist jedoch, daß sie sich veralteter Mittel, wie dem Briefverkehr, bedienen und daher für den Kunden relativ unkomfortabel zu handhaben sind. Außerdem sind die Verfahren recht zeitaufwendig und damit unbefriedigend, da der Kunde meist erst nach Wochen von einem eventuellen Gewinn erfährt. Unter diesem Nachteil leidet vor allem die Werbewirksamkeit der bekannten Verfahren.

Aufgabe der Erfindung ist es nunmehr, ein Verfahren zur Verlosung zu schaffen, das sich moderner Kommunikationsmedien bedient und damit das Interesse des Kunden weckt und aus diesem Grund für Anbieter oder Betreiber besonders attraktiv ist. Außerdem soll sich das Verfahren mit einfachen Mitteln umsetzen lassen. Es ist auch die Aufgabe der Erfindung, ein System zur Umsetzung des Verfahrens zu schaffen.

Diese Aufgaben werden durch ein Verfahren nach Anspruch 1 und ein System nach Anspruch 11 gelöst.

Der besondere erfinderische Gedanke liegt darin, sich für die Verlosung einer Ware und/oder Dienstleistung eines Kommunikationsnetzes, insbesondere eines Telephonnetzes, zu bedienen, um damit eine höhere Attraktivität beim Kunden und so eine größerer Werbewirksamkeit zu erzeugen. Durch die Nutzung eines solchen Netzes bekommt das an sich veraltete Verfahren der Verlosung einen neuen zeitgemäßen Charakter. Dabei nutzt das Verfahren das Bedürfnis der Kunden, sich spontan über ein Kommunikationsnetzt an einer Veranstaltung mit Aussicht auf einen Vorteil zu beteiligen. Dieses Bedürfnis ist beispielsweise aus dem Bereich des "Teleshoping" bekannt, wo mittlerweile große Umsätze mit den dort angebotenen Produkten erzielt werden können. Die Erfindung kann mit den bekannten Netzen und den darin vorhandenen Geräten wie beispielsweise zentral aufgestellten Servern umgesetzt werden und steht damit einem großen Ansturm von Kunden zur Verfügung. Mehrere Firmen können also unter derselben Nummer ihre Artikel anbieten.

Die Erfindung drückt sich darin aus, daß sich ein um die Verlosung wissender Kunde zunächst über ein Endgerät unter Vorgabe einer zentralen Netzkennung in das Netz einwählt. Als Endgerät kann im Fall eines Telephonnetzes ein Festnetzoder Mobiltelephon benutzt werden. Falls als Kommunikationsnetz das Internet gewählt wird, ist ein Zugang über einen PC als Endgerät möglich. Die Verlosung wird über eine zentrale und veröffentlichte Netzkennung, beispielsweise eine Servicenummer eines Diensteanbieters, angewählt. Der Anruf kann kostenpflichtig oder auch kostenlos angeboten werden. Mit der Netzkennung wird ein ebenfalls an das Netz angeschlossener Computer angewählt, der sich vorteilhafter Weise mit einem Sprachmodul beim Kunden meldet und diesen begrüßt. Der Computer hat Zugriff auf eine Angebots-Datenbank, in der verschiedene Waren und/oder Dienstleistungen angeboten werden. Aus diesem Angebot wählt der Computer insbesondere einen Artikel aus und ordnet ihn dem Kunden zu. Die Auswahl kann nach verschiedenen Kriterien geschehen. Sobald dieser Artikel mehreren Kunden zugeordnet oder sobald eine vorgegebene Zeit abgelaufen ist, wird der Artikel vom Computer nach einem kontrollierbaren Zufallsverfahren verlost.

In einer vorteilhaften Form wählt der Computer den Artikel, also das Angebot, aus der in der Angebots-Datenbank gespeicherten Menge von Angeboten zufällig aus. Damit wird gewährleistet, daß kein Angebot im Verhältnis zu anderen Angeboten benachteiligt oder bevorzugt wird. Selbstverständlich kann die Auswahl dadurch ein wenig unterstützt werden, daß auf Grund der über den Anrufer zur Verfügung stehenden Daten, wie dem aus der Ortskennung ableitbaren Wohnsitz oder dem aus der Stimme entnehmbaren Geschlecht oder Alter, eine gewisse Vorauswahl getroffen wird. So ist es möglich, die Artikel einer entsprechenden Zielgruppe anzubieten. Insbesondere ist bei regionalen Angeboten eine Eingrenzung möglich. Die Auswahl wird vorteilhafter Weise dadurch unterstützt, daß nach Vorgabe einer kundenbezogenen Zahl, wie beispielsweise der angegebenen Postleitzahl oder der identifizierten Telephon-Vorwahl, eine Zufallszahl generiert wird, deren Basis von der kundenbezogenen Zahl gebildet wird. Anhand der Zufallszahl wird dann eine Ware und/oder Dienstleistung aus dem Angebot ausgewählt. Auf diese Weise wird der Zufall kundenspezifisch "gesteuert". Die Zufallszahl wird vorteilhafter Weise von einem auf dem Computer realisierten Zufallsgenerator generiert, wobei dieser nach einem beliebigen der bekannten mathematischen Prinzipien arbeiten kann.

Um den Anbietern der zur verlosenden Waren und/oder Dienstleistungen das Verfahren attraktiv zu machen, ist es vorteilhaft, die Möglichkeit zu schaffen, dem Kunden über sein Endgerät eine das ausgewählte Angebot betreffende Werbung vorführen zu können. Das Anhören der Werbung ist sozusagen der Preis, den der Kunde für die Teilnahme zu zahlen hat. Dieser Preis wird dem Kunden mit Sicherheit gerechtfertigt erscheinen. Dieses Verfahren bietet somit allen Beteiligten einen Vorteil. Der Kunde hat Spaß und Spannung, der Netzanbieter bekommt Nutzungsgebühren (Telephongebühren) und der Anbieter des Artikels hat den Werbeeffekt.

Um den Gewinn zugestellt zu bekommen, ist es besonders einfach und damit vorteilhaft, wenn der Kunde seine Zustell-Adresse angibt. Diese kann von dem Computer automatisiert aufgenommen und abgespeichert werden und steht damit für weitere Werbeaktionen zur Verfügung. Bei der Umsetzung des Verfahrens ist selbstverständlich auf die Vorschriften des Datenschutzes und des unlauteren Wettbewerbs zu achten. Außerdem ist der regelgerechte Ablauf der Verlosung nachprüfbar zu gewährleisten.

In einer besonders vorteilhaften Ausführungsform werden die Sprachangaben des Kunden von dem schon erwähnten auf dem zentralen Computer (Server) realisierten Programm zur Sprachverarbeitung aufgenommen und ausgewertet. Dieses Programm unterstützt die Automatisierung des Verfahrens und schafft damit die Möglichkeit, eine große Anzahl von Kunden zu bedienen und an der Verlosung teilhaben zu lassen. Die bekannten Programme zur Sprachverarbeitung bieten dabei eine Vielzahl von Möglichkeiten beispielsweise im Hinblick auf eine Sprachanalyse. Außerdem ist es für den Anrufer angenehmer, einen freundlichen "Kommunikationspartner" statt einer monotonen Textansage mit rudimentärer sprachgesteuerter Menueführung gegenübergestellt zu sein.

Hinsichtlich des Zeitpunktes der Verlosung kann es vorteilhaft sein, sie nach Ablauf eines definierten Zeitraums unter den bis dahin zu einem speziellen Angebot registrierten Kunden vorzunehmen. Der Modus sollte allerdings für den Kunden nachvollziehbar sein. So kann bei entsprechendem Angebot und vorhandener Nachfrage alle zehn Minuten eine Verlosung stattfinden. Eine Niete, also eine nicht erfolgte Auswahl eines Teilnehmers, kann zum Anlaß genommen werden, diesen automatisch zu kontaktieren, um ihn auf weitere Angebote hinzuweisen. Generell ist das erfindungsgemäße System jederzeit über 24 Stunden am Tag erreichbar.

So wie dargestellt, kann das erfindungsgemäße Verfahren und das entsprechende System als Forum genutzt werden, über das Anbieter ihrer Produkte bewerben. Dazu ist es allerdings vorteilhaft, wenn das System dem Anbieter die Möglichkeit bietet, seine Angebote auf einfache Weise selber in.das Verfahren einzubringen. Eine solche Aktualisierung des Angebot kann dabei insbesondere über das Netz erfolgen, das den Zugang zu dem Computer schafft. Die Angebote sollten dabei allerdings vom Initiator des Verfahrens auf ihren Inhalt überprüft werden, um einen Mißbrauch auszuschließen.

In einer besonderen Ausführungsform werden Mobiltelephone, mit denen eine Kommunikation über das Internet, insbesondere das WAP Netz, möglich ist direkt in das erfindungsgemäße Verfahren eingebunden. Die Benachrichtigung über einen Gewinn respektive einen Nichtgewinn kann direkt auf dem Display des Telephons ausgegeben werden. Dabei kann die Ausgabe mit einem ansprechenden Layout und mit Soundeffekten ausgestattet werden.

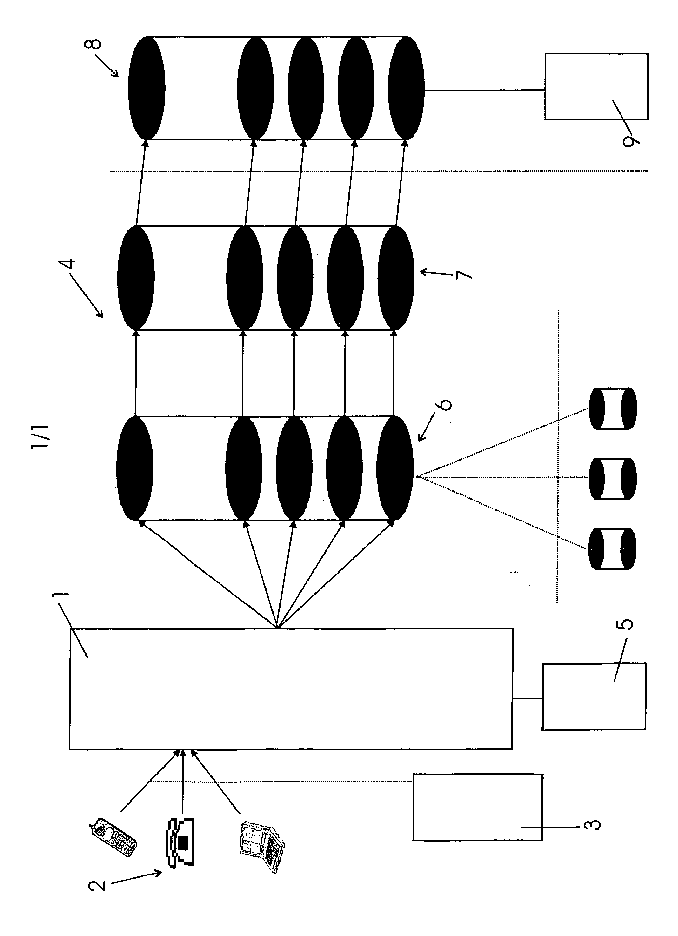

Eine vorteilhafte Ausführungsform des Verfahrens ist in der Figur dargestellt und wird nachfolgend näher beschrieben.

Die Figur zeigt das erfindungsgemäße System zur Umsetzung des Verfahrens. Es weist als zentrale Komponente ein Kommunikationsnetz 1 aus, das in diesem Fall ein Telephonnetz ist. An das Netz sind eine Vielzahl von nicht dargestellten Teilnehmern angeschlossen, wobei einem Anschluß eines Teilnehmers eine individuelle Netzkennung, in diesem Fall eine Telephonnummer zugeordnet ist. Als repräsentativer Anschluß ist hier der eines Kunden dargestellt, der über Telephon oder PC 2 Zugang zu dem Netz 1 erhält. Die Netzkennung ist mit dem Kasten 3 dargestellt. Der Zugang zum Netz 1 erfolgt hier vermittels einer "ACD" ("Automatic Call Distribution") über eine Servicerufnummer, die mit 0180 beginnt. Der Kunde wählt diese Nummer, wird mit einem am Netz 1 befindlichen Computer 4 verbunden und gibt seine Postleitzahl y über ein darauf realisiertes Programm vor. Ein Zufallsgenerator 5 ermittelt eine Zufallszahl x zwischen 1 und n, wobei n die Anzahl der Angebote ist. Anhand der Postleitzahl y und der Zufallszahl x wird ein Angebot ausgewählt.

Nach der Auswahl hört sich der Kunde eine kurze Werbeansage betreffend das Produkt an. Diese entnimmt der Computer einer Angebots-Datenbank 6, in der die Waren und Dienstleistungen in Verbindung mit den Ansagen gespeichert sind. Nach der Ansage wird er aufgefordert, seine Adresse zu hinterlassen, die in einer ebenfalls zugänglichen Datenbank 7 gespeichert wird. Unter allen teilnehmenden Kunden wird dann ein Produkt verlost der Kunde wird über den Gewinn informiert. Jeder Kunde kann seine Gewinnchance erhöhen indem er mehrmals anruft. Dabei ist sicherzustellen, daß den Anrufern mindestens ein zu verlosendes Produkt gegenübersteht. Die eigentliche Verlosung wird über eine weitere Datenbank 8 abgewickelt, wobei zu festgelegten Zeiten (eventuell stündlich) ein Zufallsgenerator 9 den Gewinner ermittelt. In der Datenbank 8 sind eine Zahl m

Teilnehmerdaten zu n Werbeeinspielungen gespeichert.

## Patentansprüche

1. Verfahren zur Verlosug einer Ware und/oder Dienstleistung über ein Kommunikationsnetz (1), insbesondere über ein Telephonnetz, wobei ein Kunde sich über ein Endgerät (2) unter Vorgabe einer zentralen Netzkennung (3) in das Netz (1) einwählt, wobei ein an das Netz (1 ) angeschlossener Computer (4) eine Ware und/oder Dienstleistung aus dem Angebot einer Angebots-Datenbank (6) ausgewählt und sie unter den teilnehmenden Kunden verlost.

2. Verfahren nach Anspruch 1,
**dadurch gekennzeichnet, daß** der Computer (4) einem Kunden ein Angebot zuordnet, wobei dieses Angebot unter mehreren Kunden, denen sie zugeordnet ist, verlost wird.

3. Verfahren nach Anspruch 1 oder 2,
**dadurch gekennzeichnet, daß** der Computer (4) das Angebot aus der in der Angebots-Datenbank (6) gespeicherten Menge von Angeboten zufällig auswählt.

4. Verfahren nach Anspruch 3,
**dadurch gekennzeichnet, daß** die Auswahl nach Vorgabe einer kundenbezogenen Zahl, insbesondere nach Angabe einer Postleitzahl oder nach Identifizierung der Telephon-Vorwahl, geschieht, wobei diese Zahl eine Basis für eine zu generierende Zufallszahl bildet, nach der eine.Ware und/oder Dienstleistung aus dem Angebot ausgewählt wird.

5. Verfahren nach einem der vorherigen Ansprüche,
**dadurch gekennzeichnet, daß** dem Kunden über sein Endgerät (2) eine das ausgewählte Angebot betreffende Werbung vorgeführt wird.

6. Verfahren nach einem der vorherigen Ansprüche,
**dadurch gekennzeichnet, daß** der Kunde seine Adresse angibt, an welche die Ware und/oder Dienstleistung nach erfolgtem Gewinn zugestellt wird.

7. Verfahren nach einem der vorherigen Ansprüche,
**dadurch gekennzeichnet, daß** die Sprachangaben des Kunden von einem auf dem Computer (4) laufenden Programm zur Sprachverarbeitung aufgenommen und ausgewertet werden.

8. Verfahren nach einem der vorherigen Ansprüche,
**dadurch gekennzeichnet, daß** ein auf dem Computer (4) realisierter Zufallsgenerator eine Zufallszahl aus der Anzahl der vorhandenen Angebote ermittelt.

9. Verfahren nach einem der vorherigen Ansprüche,
**dadurch gekennzeichnet, daß** die Verlosung nach Ablauf eines definierten Zeitraums unter den bis dahin zu diesem Angebot registrierten Kunden geschieht.

10. Verfahren nach einem der vorherigen Ansprüche,
**dadurch gekennzeichnet, daß** das Angebot von einzelnen Anbietern aktualisiert wird, die, insbesondere über das Netz, Zugang zu dem Computer haben.

11. System, insbesondere zur Umsetzung des Verfahrens nach einem der vorherigen Anspüche, aufweisend ein Kommunikationsnetz (1), insbesondere ein Telephonnetz, das eine Vielzahl daran angeschlossener Teilnehmer verbindet, wobei einem Anschluß eines Teilnehmers eine individuelle Netzkennung (3) zugeordnet ist, und umfassend einen an das Netz angeschlossenen und über eine zentrale Netzkennung anwählbaren Computer (4),
**dadurch gekennzeichnet, daß** auf dem Computer (4) ein Programm realisiert ist, das unter anrufenden Kunden eine automatische Verlosung einer in einem Angebot (6) befindlichen Ware und/oder Dienstleistung vornimmt.
